# EUROPÄISCHE PATENTSCHRIFT

(11) **EP 2 163 794 B1**
(45) Veröffentlichungstag und Bekanntmachung des Hinweises auf die Patenterteilung: **03.04.2013**
(21) Anmeldenummer: 09011662.5
(22) Anmeldetag: 11.09.2009
(51) Int. Cl.: F16J 15/12, F16L 23/18

(54) **Dichtungsring mit einem ringförmigen metallischen Träger sowie Verfahren zur Herstellung eines Dichtungsring**
Seal ring with a ring-shaped metallic holder and method for producing a seal ring
Anneau d'étanchéité doté d'un support métallique annulaire et procédé de fabrication d'un anneau d'étanchéité

(30) Priorität: 11.09.2008 DE 102008046771
(43) Veröffentlichungstag der Anmeldung: 17.03.2010
(73) Patentinhaber: Kempchen Dichtungstechnik GmbH, 46147 Oberhausen (DE)
(72) Erfinder: Arndt, Dipl. Ing. Rainer, 51381 Leverkusen (DE)
(74) Vertreter: Albrecht, Rainer Harald

(56) Entgegenhaltungen:
- DE-A1- 4 105 367
- DE-U1- 8 704 943
- US-A- 1 897 088
- US-A- 2 006 381

## Beschreibung

Die Erfindung betrifft einen Dichtungsring mit einem ringförmigen metallischen Träger und einer auf dem Träger angeordneten Weichstoffauflage. Der metallische Träger ist vorzugsweise aus Blech gebildet. Der Dichtungsring kann beispielsweise als Flanschdichtung vorgesehen sein, wobei auf jeder Seite des ringförmigen Trägers jeweils eine Weichstoffauflage zur Abdichtung angeordnet ist. Die Weichstoffauflage kann dabei den metallischen Träger vollständig oder lediglich in einem ringförmigen Abschnitt abdecken. Darüber hinaus kann der metallische Träger auch seitlich und/oder im Bereich der Weichstoffauflage profiliert ausgeführt sein.

Bei den aus der Praxis bekannten Dichtungsringen mit den eingangs beschriebenen Merkmalen erfolgt üblicherweise eine Verbindung der zumindest einen Weichstoffauflage mit dem metallischen Träger durch einen Klebstoff. Eine entsprechende Dichtungsanordnung für eine flache Flanschverbindung ist aus der DE 295 04 402 U1 bekannt. Auch wenn sich das Verkleben der Weichstoffauflage und des metallischen Trägers in der Praxis bewährt hat, besteht bei einigen Anwendungen das Problem, dass die durch ein mögliches Ausgasen des Klebstoffes bedingten Verunreinigungen nachteilig sind. Des Weiteren ist das Verkleben in der Massenfertigung von Dichtungsringen mit einem erheblichen Material- und Fertigungsaufwand verbunden. Bei einer Alterung des Klebstoffes oder einem ungleichmäßigen Klebstoffauftrag besteht zusätzlich die Gefahr, dass die Weichstoffauflage sich vor oder während der Montage der Dichtungsringes von dem metallischen Träger löst. Des Weiteren bildet die Klebstoffschicht eine weniger große Diffusionssperre als das Dichtmaterial.

Aus der US 1 897 088 ist eine Flachdichtung mit einem flächigen metallischen Träger bekannt, aus dessen Material nasenförmige Halteelemente geformt sind. Bei der Herstellung der Dichtung werden Weichstoffauflagen auf die auf beiden Seiten vorstehenden Halteelementen aufgebracht und von den Halteelementen durchstochen. Sodann werden sämtliche Halteelemente mittels einer Walzenanordnung in die gleiche Richtung umgelegt. Eine solche Herstellung setzt voraus, dass sämtliche Halteelemente gleich ausgerichtet und entsprechend in die gleiche Richtung umgelegt werden können. Die Spitzen der Halteelemente liegen unmittelbar im Bereich der Oberfläche der Weichstoffauflage, so dass bei der Montage der Dichtung die dann angrenzenden Dichtflächen durch die Halteelemente beschädigt werden können. Eine entsprechende flache Dichtung ist auch aus der US 2 006 381 un aus der DE 4105367 A1 bekannt.

Vor diesem Hintergrund liegt der vorliegenden Erfindung die Aufgabe zugrunde, einen Dichtungsring anzugeben, bei dem die Weichstoffauflage sicher mit dem ringförmigen metallischen Träger verbunden ist und bei dem die zuvor beschriebenen Nachteile vermieden werden.

Ausgehend von einem Dichtungsring mit den eingangs beschriebenen Merkmalen wird die Aufgabe erfindungsgemäß durch gelöst, die Merkmale des kenzeichenden Teils des Anspruchs 1 . Erfindungsgemäß sind die Halteelementen aus dem Material des metallischen Trägers gebildet, so dass die Dichtung lediglich aus Metall, vor zugsweise einem Metallblech, und zumindest einer Weichstoffauflage gebildet werden kann. Insbesondere wird für die formschlüssige Verbindung kein Klebstoff benötigt, so dass sich die Herstellung vereinfacht und der Materialaufwand reduziert ist. Auch eine Verunreinigung durch ein Ausgasen von Klebstoff ist damit ausgeschlossen. Vorteilhaft ist auch, dass der gesamte Träger mit den Halteelementen als einstückiges Teil ausgebildet ist. Gemäß der vorliegenden Erfindung kann die Dichtung insbesondere vollständig aus Materialien mit einer hohen Widerstandsfähigkeit gegen Wärme gebildet werden, so dass die erfindungsgemäße Dichtung bei einer entsprechenden Ausführung auch im besonderen Maße für den Einsatz bei hohen Temperaturen geeignet ist. Durch den Verzicht auf Klebstoff kann üblicherweise auch die Dichtwirkung verbessert werden.

Schließlich kann durch den erfindungsgemäß erreichten Formschluss gewähr leistet werden, dass die Dichtung auch nach einer langen Lagerung funktionsfähig ist, wobei auch bei mechanischen Belastungen während der Montage, beispielsweise bei einem Biegen der Dichtung, ein sicherer Halt der Weichstoffauflage durch die Halteelemente gewährleistet ist.

Die vorliegende Erfindung bezieht sich auf Dichtungsringe mit einem ringförmigen Träger, wobei vorzugsweise an beiden Seiten des ringförmigen Trägers jeweils eine Weichstoffauflage vorgesehen ist und wobei jede der Weichstoffauflagen durch jeweils zugeordnete Halteelemente fixiert ist. Die Weichstoffauflage liegt dabei üblicherweise auf einen im Wesentlichen ebenen ringförmigen Bereich des metallischen Trägers auf. Aufgrund der ringförmigen Ausgestaltung weisen die an dem ringförmigen metallischen Träger umlaufenden Halteelemente üblicherweise auch eine unterschiedliche räumliche Ausrichtung auf, was ein speziell angepasstes, geeignetes Herstellungsverfahren erfordert.

Um im eingebauten Zustand des Dichtungsrings einen Kontakt der Halteelemente mit den jeweils zugeordneten Dichtflächen der angrenzenden Teile zu vermeiden, ist erfindungsgemäß vorgesehen, dass die Halteelemente bezogen auf die von der Oberfläche der jeweiligen Weichstoffauflage gebildeten Anlagefläche zurückspringen. Dazu kann die Dichtauflage im Bereich der Halteelemente jeweils eine Vertiefung aufweisen. Die Halteelemente werden dann so angeordnet, dass diese bezogen auf die von der Oberfläche der Weichstoffauflage gebildeten Anlagefläche zurückspringen. Die Vertiefung kann beispielsweise dadurch erzeugt werden, dass die freien Enden der Halteelemente, beispielsweise mit einen Pressstempel oder einen an die Form des zu bildenden Dichtungsrings angepassten Werkzeug, in die Weichstoffauflage hinein gedrückt werden. Des Weiteren kann aber auch die Weichstoffauflage bereits vor der Verbindung mit dem metallischen Träger mit einer Vertiefung versehen sein. Wenn die Halteelemente in bevorzugter Weise entlang einer Umfangslinie angeordnet sind, kann die Weichstoffauflage in dem zugeordneten Bereich eine in Umfangsrichtung umlaufende Nut aufweisen. Die Erzeugung einer Vertiefung vor der Verbindung mit der Weichstoffauflage ist insbesondere dann zweckmäßig, wenn ansonsten bei einem Eindrücken der freien Enden der Halteelemente in die Weichstoffauflage eine Gefahr einer Beschädigung oder Zerstörung der Weichstoffauflage bestehen würde. Bei dem Umbiegen der Halteelemente ist zu berücksichtigen, dass diese einen unterschiedliche Ausrichtung aufweisen.

Die Halteelemente sind vorzugsweise nasen- oder streifenförmig ausgebildet, wobei freie Enden der Halteelemente zur formschlüssigen Fixierung der Weichstoffauflage umgebogen sind. Nasenförmig meint im Rahmen der vorliegenden Erfindung, dass die Halteelemente sich in Richtung ihrer freien. Enden verjüngen, beispielsweise bogenförmig oder dreieckförmig zulaufen. Eine entsprechende Ausgestaltung ist auch bei der Herstellung des Dichtungsrings vorteilhaft, wenn die zumindest eine Weichstoffauflage von den freien Enden der Halteelemente durchstoßen werden soll. Die freien Enden verschiedener für die Fixierung einer Weichstoffauflage vorgesehener Halteelemente sind vorzugsweise in unterschiedliche Richtungen umgebogen, um den Formschluss zu verbessern.

Bezogen auf den Querschnitt der Weichstoffauflage sind die Halteelemente vorzugsweise in einem mittleren Bereich vorgesehen. Die Weichstoffauflage ist dabei seitlich der Halteelemente, d. h. bei dem Dichtungsring in radialer Richtung gesehen innerhalb und außerhalb des Umfangsbereiches, in dem die Halteelemente angeordnet sind, unverändert. Die Stabilität und die Dichtwirkung der Weichstoffauflage werden bei einer solchen Ausgestaltung nicht oder zumindest nicht wesentlich beeinträchtigt. Eine Durchtrennung oder Schwächung der Weichstoffauflage an ihrem inneren oder äußeren Rand könnte abhängig von dem jeweils vorgesehenen Material ein unerwünschtes Brechen der Weichstoffauflage bei der Handhabung oder Montage der Dichtung zur Folge haben.

Die Weichstoffauflage kann im Rahmen der Erfindung beispielsweise aus Graphit, Kunststoff oder einem Fasermaterial gebildet sein. Als Fasermaterial wird im Rahmen der Erfindung ein aus mineralischen Fasern, pflanzlichen Fasern, Kunststofffasern oder aus Mischungen dieser Fasern gebildetes Material verstanden. Schließlich sind auch Kombinationen verschiedener Werkstoffe möglich. So kann in ein Fasermaterial Graphit, Kunststoff oder ein anderes Dichtmittel zur Verbesserung der Dichtwirkung eingebettet sein. Des Weiteren können auch Kunststoff oder Graphit durch Fasern verstärkt sein. Auch eine mehrschichtige Anordnung der üblicherweise ringförmigen Weichstoffauflage ist im Rahmen der vorliegenden Erfindung nicht ausgeschlossen. Die Weichstoffauflage kann schließlich auch in der üblichen Weise Beimischungen zur Verbesserung ihrer Eigenschaften oder Verunreinigungen aufweisen. Die Weichstoffauflage besteht vorzugsweise aus einem nicht-elastischen oder nahezu nicht-elastischen Material.

Im einfachsten Fall ist der beispielsweise aus Blech durch Stanzen gebildete ringförmige metallische Träger eben, wobei die zumindest eine Weichstoffauflage den metallischen Träger nur abschnittsweise oder vollständig abdecken kann. Im Rahmen einer solchen Ausgestaltung ist der metallische Träger vornehmlich dafür vorgesehen, dem Dichtungsring die erforderliche Stabilität zu verleihen, während die Dichtwirkung ausschließlich durch die Weichstoffauflage erzielt wird.

Gemäß einer alternativen Ausgestaltung der Erfindung ist vorgesehen, dass der ringförmige metallische Träger einen profilierten Bereich und einen zumindest im Wesentlichen ebenen Bereich zur Befestigung der Weichstoffauflage aufweist. Der ringförmige metallische Träger weist dann zumindest einen ringförmigen profilierten Bereich und einen im Wesentlichen ebenen ringförmigen Bereich zur Befestigung der Weichstoffauflage auf. Die Weichstoffauflage kann sich dabei ohne Einschränkung über die gesamte Fläche des metallischen Trägers oder nur eine Teilfläche, beispielsweise nur den ebenen Bereich erstrecken. Die Profilierung kann beispielsweise derart ausgebildet sein, dass in radialer Richtung eine Wellen- oder Zackenform vorgesehen ist, wobei die gebildeten Wellenberge und -täler in Umfangsrichtung umlaufen. Der Verlauf des profilierten Bereiches in radialer Richtung kann ohne Einschränkung beispielsweise dreieckförmig, sägezahnförmig, sinusförmig oder kreissegmentförmig ausgebildet sein. Eine solche Profilierung verleiht der Dichtungsanordnung eine gewisse Elastizität und kann auch zu einer Verbesserung der Abdichtung beitragen, wenn die einzelnen Profilspitzen im eingebauten Zustand an einer zugeordneten Dichtfläche eines angrenzenden Bauteils anliegen.

Im Rahmen einer besonders bevorzugten Weiterbildung ist vorgesehen, dass der ringförmige Bereich zur Befestigung der zumindest einen Dichtauflage zwischen einem äußeren und einem inneren konturierten Bereich angeordnet ist.

Die Dicke des Materials, aus dem der ringförmige metallische Träger gebildet ist und die Dicke der vorzugsweise an beiden Seiten des metallischen Trägers vorgesehenen Weichstoffauflage ist im Rahmen der Erfindung nicht eingeschränkt. Insbesondere ist die erfindungsgemäß vorgesehene formschlüssige Fixierung auch bei dünnen Dichtungen möglich, die beispielsweise einen metallischen Träger aus einem Blech mit einer Dicke von 0,2 bis 1 mm und zwei Weichstoffauflagen mit einer Dicke von 0,5 bis 2 mm aufweisen. Überraschenderweise können auch bei einem derart dünnen Blech ausreichende Haltekräfte erzeugt werden, wobei auch das dünne Material der Weichstoffauflage im Bereich der Halteelemente bei der Herstellung und Handhabung der Dichtung nicht geschädigt oder zerstört wird. Im Rahmen der Erfindung kann der metallische Träger aber auch aus einem Blech mit einer Dicke von mehr als 1 mm bestehen. Des Weiteren kann der metallische Träger auch als Drehteil ausgebildet sein, wobei dann zweckmäßigerweise bei der Herstellung Bereiche mit einer geringen Dicke erzeugt werden, um dort, beispielsweise durch Stanzen, die Halteelemente aus dem metallischen Träger bilden zu können. Damit ist es auch möglich Kammprofildichtringe nach der erfindungsgemäßen Lehre auszubilden.

Gegenstand der Erfindung ist auch ein Verfahren zur Herstellung der zuvor beschriebenen Dichtungsringe vorgesehen.

Der ringförmige metallische Träger kann auf besonders einfache Weise aus einem Blech, beispielsweise durch Stanzen, gebildet werden. Die Halteelemente werden bevorzugt nasen- oder streifenförmig, beispielsweise durch Stanzen, aus dem Blech herausgetrennt. Die gebildeten Nasen oder Streifen stehen dabei bevorzugt etwa rechtwinklig von dem Träger ab, um eine vorzeitige unkontrollierte Verformung bereits während des Auflegens der Weichstoffauflage zu vermeiden. Im Rahmen der Erfindung kann auch in einem einzigen Stanzvorgang der metallische Träger mit seinen Halteelementen und einer optional vorgesehenen weiteren Strukturierung, beispielsweise einem ringförmigen Wellenabschnitt, gebildet werden.

Erfindungsgemäß werden die freien Enden der Halteelemente derart verformt, dass diese bezogen auf die von der Oberfläche der Weichstoffauflage gebildete Anlagefläche zurückspringen. Die freien Enden der Halteelemente können mit einem Pressstempel in die Weichstoffauflage hineingedrückt werden, wobei auch die unmittelbar angrenzenden Bereiche der Weichstoffauflage eingedrückt werden. Gemäß der Form des Pressstempels sind die Vertiefung üblicherweise größer als die jeweils darin angeordneten umgebogenen freien Enden der Halteelemente und können beispielsweise die Form eines Kreises aufweisen. Alternativ kann auch vorgesehen sein, dass im Bereich Halteelemente bereits eine Vertiefung in der Weichstoffauflage vorgesehen ist.

Vorzugsweise wird im Rahmen des erfindungsgemäßen Verfahrens eine ringförmige, durchgehende Weichstoffauflage verwendet, die bei dem Auflegen auf den Träger von den Halteelemente durchbrochen wird, da im Rahmen einer solchen Ausgestaltung die ringförmige Weichstoffauflage besonders kostengünstig gefertigt werden kann. Es ist aber auch möglich, vor dem Auflegen auf den metallischen Träger in der Weichstoffauflage Öffnungen für die Halteelemente, beispielsweise durch Bohren oder Stanzen, zu erzeugen oder auch bereits bei der Herstellung der Weichstoffauflage, beispielsweise bei einer Bildung aus Kunststoff oder bei einem Pressen aus Graphit, Öffnungen für die Halteelemente vorzusehen. Dies ist zwar mit einem zusätzlichen Aufwand verbunden, kann aber insbesondere dann zweckmäßig sein, wenn die Gefahr besteht, dass die Weichstoffauflage ansonsten beschädigt oder zerstört wird, wenn diese von den freien Enden der Halteelemente durchstoßen wird.

Vorzugsweise werden Dichtungsringe gebildet, die auf beiden Seiten des ringförmigen metallischen Trägers jeweils eine Weichstoffauflage aufweisen. Die Halteelemente werden dabei derart geformt, dass ein erster Teil der Halteelemente an einer ersten Seite und ein zweiter Teil der Halteelemente an einer zweiten Seite des Trägers vorsteht.

Die Erfindung wird nachfolgend anhand einer lediglich ein Ausführungsbeispiel darstellenden Zeichnung erläutert. Es zeigen:
- **Fig.1**: einen metallischen Träger aus Blech und zwei Weichstoffauflagen zur Bildung einer erfindungsgemäßen Dichtung,
- **Fig. 2a bis 2c**: alternative Ausgestaltungen einer erfindungsgemäßen Dichtung,
- **Fig. 3**: eine Schnittdarstellung entlang des Kreisbogens A-A der Fig. 2a,
- **Fig. 4**: den Bereich eines Halteelementes im Rahmen einer afternativen Ausführung in einer Schnittdarstellung.

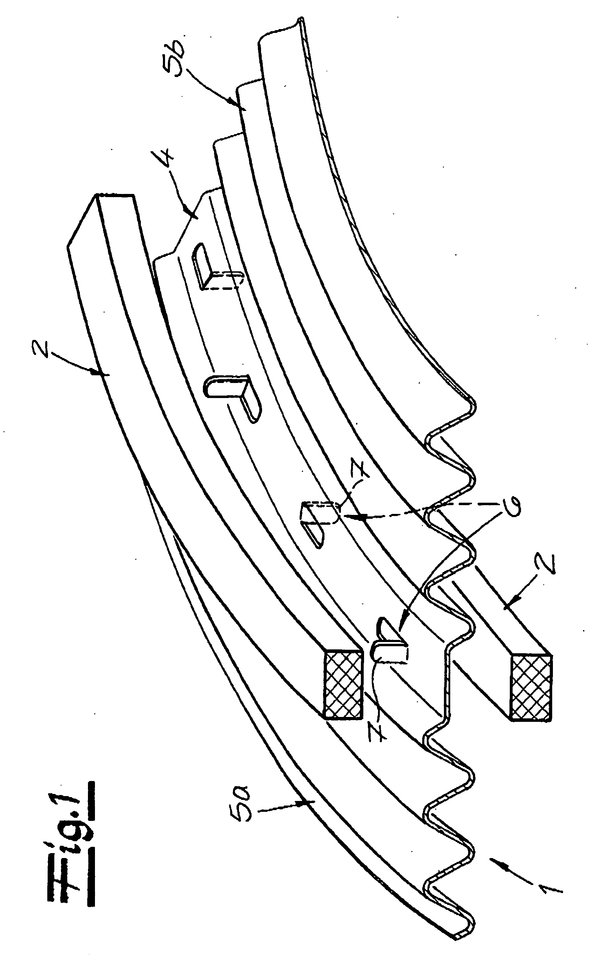

Fig. 1 zeigt einen ringförmigen metallischen Träger 1 aus einem Blech und zwei Weichstoffauflagen 2 zur Bildung eines erfindungsgemäßen Dichtungsrings 3. Zur Aufnahme der Weichstoffauflagen 2 ist ein ebener im Wesentlichen ringförmiger Bereich 4 vorgesehen, der zwischen einem äußeren und einem inneren wellenförmig konturierten Bereich 5a, 5b angeordnet ist. Um die Weichstoffauflage 2 formschlüssig auf dem Träger 1 fixieren zu können, sind aus dem Blech des Trägers 1 Halteelemente 6 geformt, die nasenförmig ausgebildet sind und mit ihrem freien Ende 7 etwa rechtwinklig von dem ebenen Bereich 4 des metallischen Trägers 1 abstehen. Um an beiden Seiten des Trägers 1 jeweils eine Weichstoffauflage 2 befestigen zu können, stehen die freien Enden 7 in Umfangsrichtung gesehen wechselweise in entgegengesetzter Richtung von dem ebenen Bereich 4 ab.

Gemäß der in Fig. 1 dargestellten Ausgestaltung sind ringförmige Weichstoffauflagen 2 vorgesehen, die zunächst um den gesamten Umfang einen gleichbleibenden Querschnitt aufweisen und so einfach und kostengünstig zu fertigen sind. Bei dem Auflegen der Weichstoffauflagen 2 auf den Träger 1 werden diese vollflächigen Weichstoffauflagen 2 dann von den freien Enden 7 der Halteelemente 6 etwa mittig durchstochen. Seitlich der Halteelemente 6 bleiben die Weichstoffauflagen 2 unverändert und behalten so ihre Stabilität und Dichtwirkung. Nachfolgend werden dann die freien Enden 7 der Halteelemente 6 umgebogen und in die jeweilige Weichstoffauflage 2 hineingedrückt, wodurch die Weichstoffauflagen 2 auf den ebenen Bereich 4 des metallischen Trägers 1 fixiert werden.

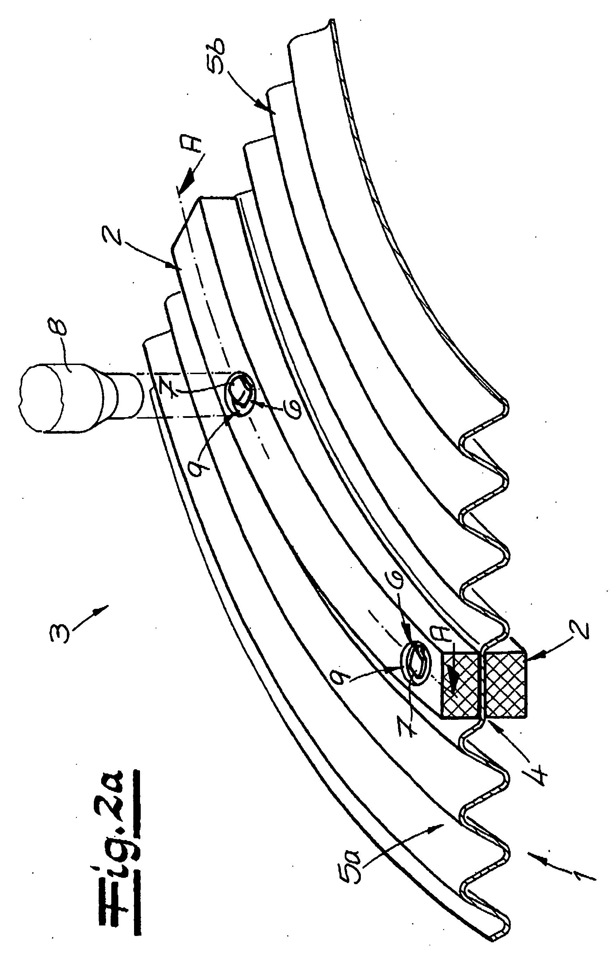

Fig. 2a zeigt die auf dem Träger 1 durch Verformen der Halteelemente 6 fixierten Weichstoffauflagen 2. Wie in Fig. 2a angedeutet, kann die Fixierung beispielsweise durch ein Umbiegen der freien Enden 7 mit einem kreisrunden Pressstempel 8 erfolgen, wobei um die freien Enden 7 herum Vertiefungen 9 erzeugt werden.

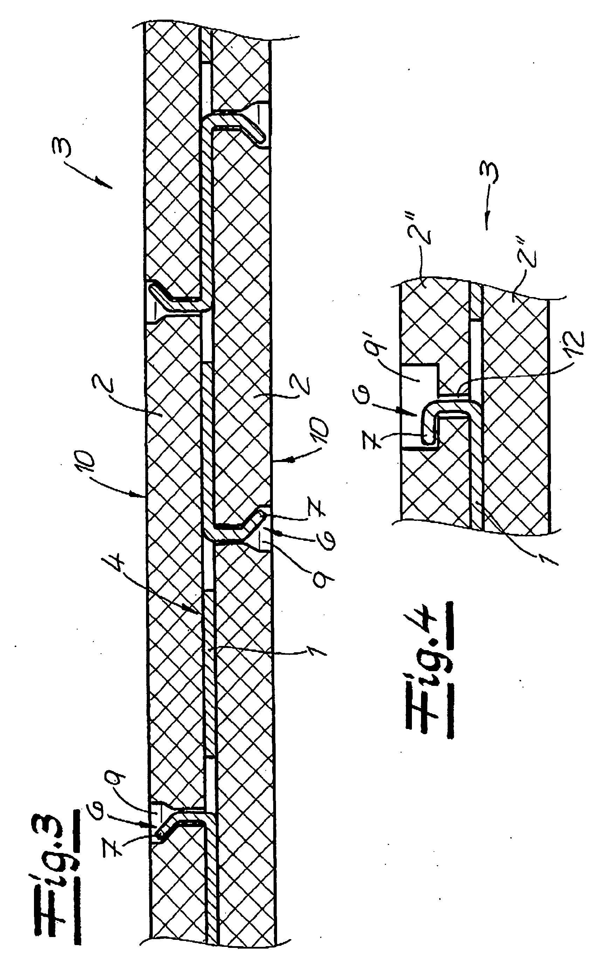

Fig. 3 zeigt eine Schnittdarstellung entlang des Kreisbogens A-A der Fig. 2a. Es ist zu erkennen, dass die Halteelemente 6 sich zunächst etwa senkrecht aus dem ebenen Bereich 4 des Trägers 1 heraus erstrecken und dann an ihren freien Enden 7 derart umgebogen sind, dass diese in den Vertiefungen 9 angeordnet sind. Die Halteelemente 6 sind dabei derart verformt, dass diese bezogen auf die von der nicht verformten Oberfläche der Weichstoffauflagen 2 gebildeten Anlageflächen 10 zurückspringen. Bei der Verwendung der Dichtung 3 wird dadurch verhindert, dass die Halteelementen 6 mit angrenzenden Dichtflächen in Kontakt kommen, wodurch diese beschädigt werden könnten.

Der Fig. 3 ist des Weiteren zu entnehmen, dass die Weichstoffauflagen 2 an beiden Seiten des metallischen Trägers 1 in gleicher Weise formschlüssig fixiert sind. Des Weiteren sind die jeweils für die Fixierung einer der Weichstoffauflagen 2 vorgesehenen Halteelemente 6 an ihren freien Enden 7 wechselseitig in entgegengesetzter Richtung umgebogen, um den Formschluss zu verbessern. Ein kontrolliertes Umbiegen der freien Enden 7 kann beispielsweise durch eine entsprechende Anschrägung an dem jeweils zugeordneten Pressstempel 8 erreicht werden.

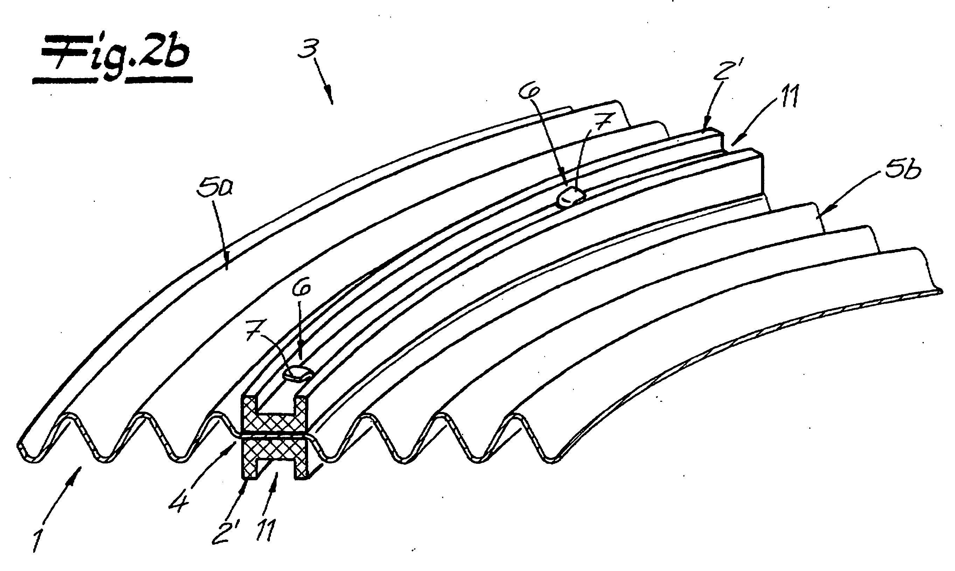

Fig. 2b zeigt eine alternative Ausgestaltung, bei der im Bereich der Halteelemente 6 an den Weichstoffauflagen 2' eine umlaufende Nut 11 vorgesehen ist. Durch die seitlich an die Nut 11 angrenzenden Bereiche der Weichstoffauflagen 2' wird eine ausreichende Abdichtung gewährleistet. Die freien Enden 7 der Halteelemente 6 sind innerhalb der Nut 11 angeordnet, so dass auch hier ein Kontakt mit im eingebauten Zustand angrenzenden Dichtflächen vermieden werden kann.

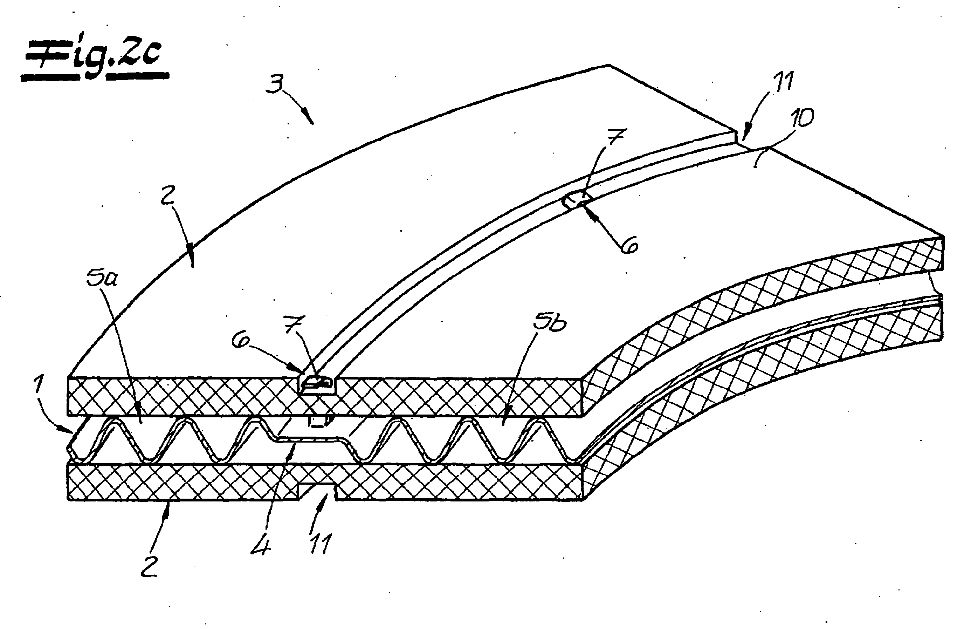

Fig. 2c zeigt eine Ausgestaltung bei der die Weichstoffauflagen 2' wie zuvor beschrieben eine umlaufende Nut 11 aufweisen. Jedoch erstrecken sich im Unterschied zu der Ausgestaltung gemäß der Fig. 2b die Weichstoffauflagen 2' über die gesamte Breite des metallischen Trägers 1. An den Weichstoffauflagen 2' ist jeweils eine Anlagefläche 10 durch die beidseitig an die Nut 11 angrenzende Oberfläche gebildet. Bei dem Umbiegen mit einem Pressstempel 8 werden die freien Enden 7 der Halteelemente 6 in der jeweils zugeordneten Nut 11 versenkt. Dabei ist darauf zu achten, dass die freien Enden 7 bezogen auf die Anlagefläche 10 zurückspringen, wobei jedoch eine starke Verformung der Weichstoffauflagen 2' durch die Krafteinwirkung zu vermeiden ist.

Fig. 4 zeigt in einer Schnittdarstellung exemplarisch einen Bereich eines Halteelements 6 im Rahmen einer weiteren alternativen Ausgestaltung. Die Weichstoffauflagen 2" weisen Vertiefungen 9' und Öffnungen 12 auf, die bereits vor der Verbindung mit dem metallischen Träger 1, beispielsweise bei der Herstellung, erzeugt wurden. Die freien Enden 7 der Halteelemente 6 erstrecken sich durch die vorbereiteten Öffnungen 12 und sind innerhalb der Vertiefungen 9' angeordnet. Mit der beschriebenen Ausgestaltung besteht die Möglichkeit den Träger 1 und die Weichstoffauflagen 2" miteinander formschlüssig zu verbinden, ohne dass die Weichstoffauflagen 2" verformt oder zumindest übermäßig verformt werden. Eine solche Ausgestaltung bietet sich insbesondere bei einem vergleichsweise harten und/oder brüchigen Material der Weichstoffauflagen 2" an.

## Patentansprüche

1. Dichtungsring mit einem ringförmigen metallischen Träger (1) und einer auf dem Träger (1) angeordneten Weichstoffauflage (2, 2', 2"), wobei aus dem Material des metallischen Trägers (1) Halteelemente (6) geformt sind, welche die Weichstoffauflage (2, 2', 2") durchgreifen und formschlüssig auf dem Träger (1) fixieren, **dadurch gekennzeichnet, dass** die freien Enden (7) der Halteelemente (6) in einer umlaufenden Nut (11) oder jeweils in einer Vertiefung (9, 9'), die ausschließlich dem jeweiligen Halteelement (6) zugeordnet ist und in der Draufsicht eine größere Fläche als das entsprechende Ende (7) aufweist, derart angeordnet sind, dass die Halteelemente (6) bezogen auf die von der Oberfläche der Weichstoffauflage (2, 2', 2") gebildete Anlagefläche (10) zurückspringen, um im eingebauten Zustand des Dichtungsringes einen Kontakt der Halteelemente (6) mit den jeweils zugeordneten Dichtflächen der angrenzenden Teile zu vermeiden wobei die Nut (11) oder die Vertiefungen (9,9'), in der Weichstoffauflage (2,2',2") vorgesehen sind

2. Dichtungsring nach Anspruch 1, **dadurch gekennzeichnet, dass** der metallische Träger (1) aus einem Blech gebildet ist.

3. Dichtungsring nach Anspruch 1 oder 2, **dadurch gekennzeichnet, dass** der metallische Träger (1) zumindest einen ringförmigen, profilierten Bereich (5a, 5b) und einen im Wesentlichen ebenen ringförmigen Bereich (4) zur Befestigung der Weichstoffauflage (2, 2', 2") aufweist.

4. Dichtungsring nach Anspruch 3, **dadurch gekennzeichnet, dass** der ringförmige Bereich (4) zur Befestigung der Weichstoffauflage (2, 2', 2") zwischen einem äußeren und einem inneren konturierten Bereich (5a, 5b) angeordnet ist.

5. Dichtungsring nach einem der Ansprüche 1 bis 4, **dadurch gekennzeichnet, dass** die Weichstoffauflage (2, 2', 2") aus Graphit, Kunststoff und/oder einem Fasermaterial gebildet ist.

6. Dichtungsring nach einem der Ansprüche 1 bis 5, **dadurch gekennzeichnet, dass** die Weichstoffauflage (2, 2', 2") aus einem nicht-elastischem Dichtungsmaterial besteht.

7. Verfahren zur Herstellung eines Dichtungsring,
wobei ein ringförmiger metallischer Träger (1) gebildet wird,
wobei an Abschnitten des metallischen Trägers (1) Halteelemente (6) geformt werden,
wobei zumindest eine Weichstoffauflage (2') mit einer umlaufenden Nut (11) zugeführt und derart auf den metallischen Träger (1) aufgelegt wird, dass diese im Bereich der Nut (11) von dem freien Enden (7) der Halteelemente (6) durchgriffen wird und
wobei die freien Enden (7) der Halteelemente (6) nachfolgend derart verformt werden, dass die Weichstoffauflage (2') im Bereich der Nut (11) formschlüssig an dem Träger (1) fixiert wird und dass die Halteelemente (6) bezogen auf die von der Oberfläche der Weichstoffauflage (2',) gebildeten Anlagefläche (10) zurückspringen, um im eingebauten Zustand des Dichtungsringes einen Kontakt der Halteelemente (6) mit den jeweils zugeordneten Dichtflächen der angrenzenden Teile zu vermeiden.

8. Verfahren zur Herstellung eines Dichtungsring,
wobei ein ringförmiger metallischer Träger (1) gebildet wird,
wobei an Abschnitten des metallischen Trägers (1) Halteelemente (6) geformt werden,
wobei zumindest eine Weichstoffauflage (2', 2") derart auf den metallischen Träger (1) aufgelegt wird, dass diese von dem freien Enden (7) der Halteelemente (6) durchgriffen wird und
wobei die freien Enden (7) der Halteelemente (6) nachfolgend mit einem Pressstempel derart umgebogen werden, dass um die freien Enden (7) der Halteelemente (6) jeweils eine Vertiefung (9) in der weichstoffauflage (2,2") erzeugt wird, die ausschlieβlich dem jeweiligen Halteelement (6) zugeardnet ist und in der Draufsicht eine gröβere Fläche als das entsprechende Ende (7) aufweist und dass die Weichstoffauflage (2, 2") formschlüssig an dem Träger (1) fixiert wird, wobei die Halteelemente (6) bezogen auf die von der Oberfläche der Weichstoffauflage (2, 2") gebildeten Anlagefläche (10) zurückspringen, um im eingebauten Zustand des Dichtungsringes einen Kontakt der Halteelemente (6) mit den jeweils zugeordneten Dichtflächen der angrenzenden Teile zu vermeiden.

9. Verfahren nach Anspruch 7 oder 8 , wobei der metallische Träger (1) aus einem Blech gebildet wird und wobei die Halteelemente (6) aus dem Blech geformt werden.

10. Verfahren einem der Ansprüche 7 bis 9, wobei an den Abschnitten des metallischen Trägers (1) die Halteelemente (6) derart geformt werden, dass ein erster Teil der Halteelemente (6) an einer ersten Seite und ein zweiter Teil der Halteelemente (6) an einer zweiten Seite des Trägers (1) vorstehen.

11. Verfahren nach einem der Ansprüche 7 bis 10, wobei die Halteelemente (6) durch ein Stanzen des metallischen Trägers (1) geformt werden.

## Claims

1. A sealing ring with an annular metallic carrier (1) and a soft material overlay (2, 2', 2") disposed on the carrier (1), wherein holding elements (6) are formed from the material of the metallic carrier (1), said holding elements engaging through the soft material overlay (2, 2', 2") and fixing the latter in a form-fit manner on the carrier (1), **characterised in that** the free ends (7) of the holding elements (6) are disposed in a circumferential groove (11) or in each case in a depression (9, 9'), which is assigned exclusively to the respective holding element (6) and in plan view has a larger area than the corresponding end (7), in such a way that the holding elements (6) are set back in relation to the contact face (10) formed by the surface of the soft material overlay (2, 2', 2"), in order to prevent contact of the holding elements (6) with the respectively assigned sealing faces of the adjacent parts in the installed state of the sealing ring, wherein the groove (11) or the depressions (9, 9') are provided in the soft material overlay (2, 2', 2").

2. The sealing ring according to claim 1, **characterised in that** the metallic carrier (1) is formed from a sheet metal.

3. The sealing ring according to claim 1 or 2, **characterised in that** the metallic carrier (1) comprises at least one annular, profiled region (5a, 5b) and an essentially plane annular region (4) for fixing the soft material overlay (2, 2', 2").

4. The sealing ring according to claim 3, **characterised in that** the annular region (4) for fixing the soft material overlay (2, 2', 2") is disposed between an outer and an inner contoured region (5a, 5b).

5. The sealing ring according to any one of claims 1 to 4, **characterised in that** the soft material overlay (2, 2', 2") is formed from graphite, plastic and/or a fibrous material.

6. The sealing ring according to any one of claims 1 to 5, **characterised in that** the soft material overlay (2, 2', 2") is made from a non-elastic sealing material.

7. A method for producing a sealing ring,
wherein an annular metallic carrier (1) is formed,
wherein holding elements (6) are formed on sections of the metallic carrier (1),
wherein at least one soft material overlay (2') with a circumferential groove (11) is supplied and placed onto the metallic carrier (1) in such a way that the free ends (7) of the holding elements (6) engaged through said soft material overlay in the region of the groove (11) and
wherein the free ends (7) of the holding elements (6) are subsequently deformed in such a way that the soft material overlay (2') is fixed in the region of the groove (11) in a form-fit manner to the carrier (1) and that the holding elements (6) are set back in relation to the contact face (10) formed by the surface of the soft material overlay (2'), in order to prevent contact of the holding elements (6) with the respectively assigned sealing faces of the adjacent parts in the installed state of the sealing ring.

8. A method for producing a sealing ring,
wherein an annular metallic carrier (1) is formed,
wherein holding elements (6) are formed on sections of the metallic carrier (1),
wherein at least one soft material overlay (2', 2") is placed onto the metallic carrier (1) in such a way that the free ends (7) of the holding elements (6) engaged through said soft material overlay and
wherein the free ends (7) of the holding elements (6) are bent over with a press punch, that a depression (9) is produced in the soft material overlay (2, 2") in each case around the free ends (7) of the holding elements (6), said depression being assigned exclusively to the respective holding element (6) and having in plan view a larger area than the corresponding end (7), and that the soft material overlay (2, 2") is fixed in a form-fit manner to the carrier (1), wherein the holding elements (6) are set back in relation to the contact face (10) formed by the surface of the soft material overlay (2, 2"), in order to prevent contact of the holding elements (6) with the respectively assigned sealing faces of the adjacent parts in the installed state of the sealing ring.

9. The method according to claim 7 or 8, wherein the metallic carrier (1) is formed from a sheet metal and wherein the holding elements (6) are formed from the sheet metal.

10. The method according to any one of claims 7 to 9, wherein the holding elements (6) are formed on the sections of the metallic carrier (1) in such a way that a first part of the holding elements (6) protrudes on a first side of the carrier (1) and a second part of the holding elements (6) protrudes on a second side of said carrier.

11. The method according to any one of claims 7 to 10, wherein the holding elements (6) are formed by punching of the metallic carrier (1).

## Revendications

1. Bague d'étanchéité avec un support métallique annulaire (1) et un appui en matière souple (2, 2', 2") agencé sur le support (1), dans laquelle des éléments de maintien (6) traversant l'appui en matière souple (2, 2', 2") et fixant celui-ci sur le support, par complémentarité de forme, sont formés à partir du matériau du support métallique (1), **caractérisée en ce que** les extrémités libres (7) des éléments de maintien (6) sont agencées de telle manière dans une rainure périphérique (11) ou dans un renfoncement (9, 9') respectif attribué exclusivement à l'élément de maintien (6) respectif et comportant une surface plus grande que l'extrémité (7) correspondante, dans une vue d'au-dessus, que les éléments de maintien (6) reculent par rapport à la surface d'appui (10) formée par la surface supérieure de l'appui en matière souple (2, 2', 2"), afin d'empêcher un contact entre les éléments de maintien (6) et les surfaces d'étanchéité correspondantes des pièces adjacentes, à l'état monté de la bague d'étanchéité, dans laquelle la rainure (11) ou les renfoncements (9, 9') sont prévus dans l'appui en matière souple (2, 2', 2").

2. Bague d'étanchéité selon la revendication 1, **caractérisée en ce que** le support métallique (1) est constitué de tôle.

3. Bague d'étanchéité selon la revendication 1 ou 2, **caractérisée en ce que** le support métallique (1) comporte au moins une région annulaire profilée (5a, 5b) et une région annulaire essentiellement plane (4) pour la fixation de l'appui en matière souple (2, 2', 2").

4. Bague d'étanchéité selon la revendication 3, **caractérisée en ce que** la région annulaire (4) pour la fixation de l'appui en matière souple (2, 2', 2") est agencée entre une région extérieure et une région intérieure profilée (5a, 5b).

5. Bague d'étanchéité selon l'une des revendications 1 à 4, **caractérisée en ce que** l'appui en matière souple (2, 2', 2") est constitué de graphite, de plastique et/ou d'une matière fibreuse.

6. Bague d'étanchéité selon l'une des revendications 1 à 5, **caractérisée en ce que** l'appui en matière souple (2, 2', 2") est constitué d'un matériau d'étanchéité non élastique.

7. Procédé pour la fabrication d'une bague d'étanchéité,
dans lequel est formé un support métallique annulaire (1),
dans lequel des éléments de maintien (6) sont formés sur des sections du support métallique (1),
dans lequel au moins un appui en matière souple (2') avec une rainure périphérique (11) est ajouté et appliqué sur le support métallique (1) de manière à être traversé par les extrémités libres (7) des éléments de maintien (6) dans la région de la rainure (11), et
dans lequel les extrémités libres (7) des éléments de maintien (6) sont par la suite déformées de manière à ce que l'appui en matière souple (2') soit fixé par complémentarité de forme au support (1) dans la région de la rainure (11), et à ce que les éléments de maintien (6) reculent par rapport à la surface d'appui (10) formée par la surface de l'appui en matière souple (2'), afin d'empêcher un contact entre les éléments de maintien (6) et les surfaces d'étanchéité correspondantes des pièces adjacentes, à l'état monté de la bague d'étanchéité.

8. Procédé pour la fabrication d'une bague d'étanchéité,
dans lequel est formé un support métallique annulaire (1),
dans lequel des éléments de maintien (6) sont formés sur des sections du support métallique (1),
dans lequel au moins un appui en matière souple (2', 2") est appliqué sur le support métallique (1) de manière à être traversé par les extrémités libres (7) des éléments de maintien (6), et
dans lequel les extrémités libres (7) des éléments de maintien (6) sont par la suite repliées à l'aide d'un tampon de presse, de manière à créer un renfoncement (9) autour de chacune des extrémités libres (7) des éléments de maintien (6), attribué exclusivement à l'élément de maintien (6) respectif et comportant une surface plus grande que l'extrémité (7) correspondante dans une vue d'au-dessus, de manière à fixer l'appui en matière souple (2, 2") par complémentarité de forme au support (1), dans lequel les éléments de maintien (6) reculent par rapport à la surface d'appui (10) formée par la surface de l'appui en matière souple (2, 2"), afin d'empêcher un contact entre les éléments de maintien (6) et les surfaces d'étanchéité correspondantes des pièces adjacentes, à l'état monté de la bague d'étanchéité.

9. Procédé selon la revendication 7 ou 8, dans lequel le support métallique (1) est constitué de tôle et dans lequel les éléments de maintien (6) sont formés dans la tôle.

10. Procédé selon l'une des revendications 7 à 9, dans lequel les éléments de maintien (6) sont formés de telle manière sur les sections du support métallique (1), qu'une première partie des éléments de maintien (6) fait saillie d'un premier côté et une deuxième partie des éléments de maintien (6) fait saillie d'un deuxième côté du support (1).

11. Procédé selon l'une des revendications 7 à 10, dans lequel les éléments de maintien (6) sont formés par estampage du support métallique (1).
